# EUROPÄISCHE PATENTSCHRIFT

(11) **EP 1 447 441 B1**
(45) Veröffentlichungstag und Bekanntmachung des Hinweises auf die Patenterteilung: **21.03.2012**
(21) Anmeldenummer: 03026619.1
(22) Anmeldetag: 19.11.2003
(51) Int. Cl.: C12M 1/00, B01L 9/00, G01N 35/04

(54) **Klimaschrank**
Air-conditioned cabinet
Armoire de climatisation

(30) Priorität: 01.02.2003 DE 10304012
(43) Veröffentlichungstag der Anmeldung: 18.08.2004
(73) Patentinhaber: Thermo Electron LED GmbH, 63505 Langenselbold (DE)
(72) Erfinder: Melching, Achim, 63505 Langenselbold (DE); Doschek, Markus, 63179 Obertshausen (DE); Kern, Christian, 63579 Freigericht (DE); Brömsen, Olaf, 64546 Mörfelden-Walldorf (DE)
(74) Vertreter: Lang, Friedrich

(56) Entgegenhaltungen:
- EP-A- 1 155 743
- DE-A- 19 952 651
- US-A1- 2002 131 895

## Beschreibung

Die Erfindung betrifft einen Klimaschrank mit einer Tür, einem Nutzraum, mindestens einer Objektträgerlagervorrichtung, mindestens einer inneren Transportvorrichtung und mindestens Transferöffnung.

Ein derartiger Klimaschrank ist aus EP-A2-1155743 bekannt. Eine übliche Anwendung ist die zeitweise Lagerung von Objektträgern, typischerweise sogenannte Mikrotiterplatten (MTP), unter vorgegebenen klimatischen Bedingungen zu Forschungszwecken und die Anwendung in der industriellen Fertigung. Zwar sind derartige Klimaschränke mit einer relativ großen Tür versehen, über welche großräumig Zugang zum Nutzraum möglich ist. Da beim Öffnen aber unvermeidbar eine unerwünschte Klimaveränderung und bei tiefer Innentemperatur Reifbildung im Nutzraum erfolgt, sind sie nur zur Wartung und Reinigung u.ä. des Nutzraums vorgesehen. Die Bestückung und Entnahme der Objektträger erfolgt daher einzeln über eine kleine, türgeschützte Transferöffnung mit Hilfe einer automatischen Transfervorrichtung. Hierbei wird der Objektträger auf einer Schaufel durch die Transferöffnung transportiert. Ein Lift mit einem horizontal verschwenkbaren Arm wirkt mit dem Schlitten zusammen und stellt die Verbindung zu den einzelnen Lagerplätzen der Objektträger her. Transfervorrichtung, Lift und Schwenkarm werden hier insgesamt als innere Transportvorrichtung bezeichnet.

Bei einer häufigen Ein- und Auslagerung von Objektträgern bei tiefen Nutzraumtemperaturen, beispielsweise im Bereich von -20°C, wenn die Schaufel entsprechend häufig von innen nach außen bewegt werden muss, kommt es aufgrund der höheren Außentemperatur zu einem Niederschlag von Umgebungsfeuchte, der sich anreichert und zu einer Vereisung der Schaufel führt.

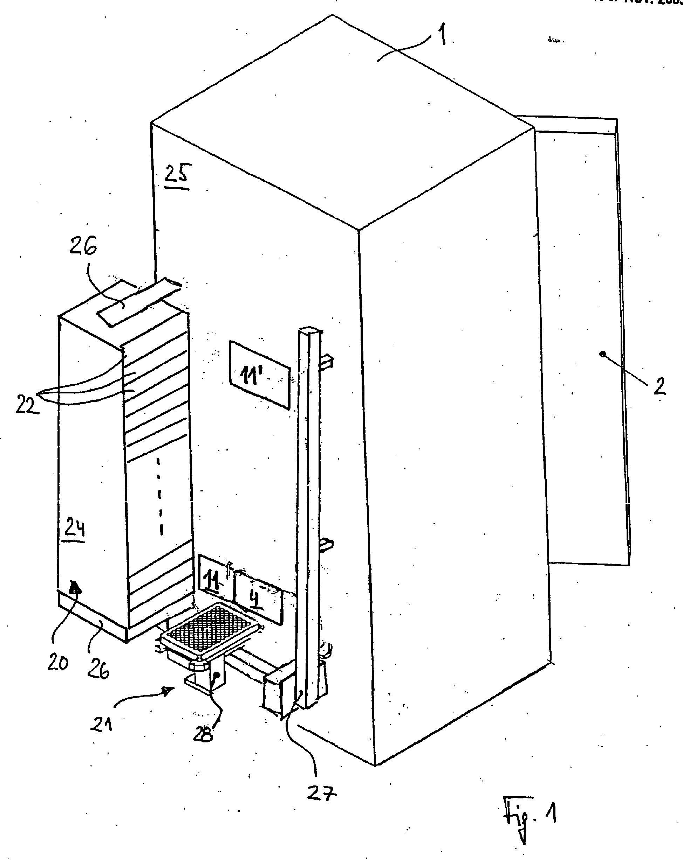

Ein weiterer Klimaschrank zur Behandlung von biochemischen Substanzen wird in der JP-A-2000093157 beschrieben. Wenn ein solcher Klimaschrank ein Karussell in einem Gehäuse und ein Regal empfängt eine Vielzahl von Platten mit biochemischen Substanzen, weist ein Klimaschrank gemäß der technischen Lehre der Druckschrift eine Gedächtniseinheit zur Speicherung von Daten auf, die ein Verhältnis zwischen der Position der Platte auf dem Regal und der Platte, die auf das Regal gesetzt wurde, und weist zudem einen Barcode-Leser auf zum Auslesen des Barcodes einer Platte. Die Anordnung sammelt die Informationen zur aktuellen Position der Platte mit den Setz-Informationen basierend auf den ausgelesenen Barcodes und gibt die Sammlung aus. Damit ist es möglich, den Vorgang der Bestätigung der Position einer Platte im Regal einzusparen und eine versehentlich falsche Position zu korrigieren. Auf diese Weise kann die Arbeitseffizienz und die Verlässlichkeit des in die Ergebnisse der Behandlung erhöht werden. Der Klimaschrank der japanischen Druckschrift weist neben einem Nutzraum, einer Tür, einer inneren Transportvorrichtung und einer Transferöffnung eine äußere Transportvorrichtung und einen Barcode-Leser mit angeschlossener Gedächtniseinheit auf, um die Informationen zur Position und zur Probe speichern zu können. Wie in Figur 1 zu sehen kann in einem vollständig geschlossenen Kasten auch eine weitere Einrichtung zur Probenmanipulation vorgesehen sein.

Der Erfindung liegt daher die Aufgabe zugrunde, einen Klimaschrank der eingangs genannten Art anzugeben, bei welchem ein vereisungsfreier Transfer von Objektträgern auch bei einer hohe Transferfrequenz und großen Temperaturunterschieden und Luftfeuchtigkeiten durchgeführt werden kann.

Diese Aufgabe wird dadurch gelöst, dass außenseitig vor der Transferöffnung eine Puffer-Objektlagervorrichtung sowie eine äußere Transportvorrichtung angeordnet sind, und dass die äußere Transportvorrichtung eine Transportverbindung zwischen der Puffer-Objektlagervorrichtung und der Transferöffnung herstellt, über welche ein Objekt zwischen der Puffer-Objektlagervorrichtung und der inneren Transportvorrichtung verbracht werden kann.

Die Erfindung hat de Vorteil, dass die Verweildauer der Schaufel in einem Bereich mit Außentemperatur auf eine Minimum beschränkt wird.

Bei einer bevorzugten Weiterbildung der Erfindung, wird der Bedienkomfort dadurch erhöht, dass die Puffer-Objektlagervorrichtung eine Vielzahl von Objektlagerplätzen aufweist. Dabei kann eine Bedienperson die Puffer-Objektvorrichtung per Hand in Ruhe und ungehindert chargenweise befüllen oder entleeren, so dass auch Arbeitszeit eingespart wird. Die vergleichsweise langsame Vereinzelung für den Transfer und der Transfer selbst erfolgen automatisch unabhängig von der Arbeit der Bedienperson.

Es ist zur Optimierung des Geräteeinsatzes vorteilhaft, dass die Puffer-Objektlagervorrichtung zur Verwendung mit einem Klimaschrank als separate Einheit ausgebildet ist, die über eine Koppelvorrichtung mit dem Klimaschrank lösbar verbindbar ist.

Die Bestückung und Entleerung des Klimaschranks wird besonders einfach dadurch, dass die Puffer-Objektlagervorrichtung mindestens eine Objektträgerkassette aufweist, weil die Objektträgerkassette unabhängig vom Klimaschrank einsetzbar ist.

Die vorstehenden Vorteile kommen besonders dadurch zur Geltung, dass die Puffer-Objektlagervorrichtung mehrere Objektlagerkassetten in einer Karussellanordnung aufweist.

Grundsätzlich kann es sich dabei um eine antriebslose Drehscheibe handeln, die von einem Bediener jeweils in die gewünschte Position gedreht wird. Eine automatische Betätigung kann mit einer grundsätzlich bekannten Karussellantriebs- und Ansteuervorrichtung erfolgen.

Die Vorteile eines automatischen Ablaufs werden besonders dadurch erzielt, dass die äußere Transportvorrichtung einen vertikal verfahrbaren Lift und eine horizontal verfahrbare Verschiebeeinheit aufweist.

Ein Temperaturabfall an der Schaufel wird dadurch minimiert, dass eine Zwischenablage für ein Objekt zwischen der äußeren und der inneren Transportvorrichtung im Bereich der Transferöffnung liegt. Die Schaufel verbleibt dabei im Wesentlichen im Bereich der Innentemperatur und erwärmt sich nicht während des Transfers.

Eine besonders vorteilhafte Weiterbildung der Erfindung besteht bei einem Klimaschrank mit mehreren Transferöffnungen, über welche entsprechend viele Objektlagervorrichtungen mittels mehrerer innerer Transportvorrichtungen beaufschlagt werden, darin, dass die äußere Transportvorrichtung mit allen Transferöffnungen in Wirkverbindung steht. Das hat den Vorteil, dass auch Klimaschränke mit großer Kapazität auf einfache Weise aus- und nachgerüstet werden können.

Zum Schutz der Objektträger und zur noch besseren Verhinderung der Vereisung ist es zweckmäßig, dass die Puffer-Objektlagervorrichtung und die äußere Transportvorrichtung in einem Gehäuse mit einer Bedienöffnung angeordnet sind. Das Gehäuse dient dabei als Schleusenraum. Das gilt insbesondere bei einer bevorzugten Weiterbildung , bei welcher eine Vorrichtung zur Vorklimatisierung der Puffer-Objektlagervorrichtung und / oder der äußeren Transportvorrichtung vorhanden ist. Unter Klimatisierung wird in diesem Zusammenhang zumindest eine Kühlung oder Erwärmung verstanden. Das hat den Vorteil, dass die Puffer-Objektlagervorrichtung als Auftaustation beim Auslagern verwendet werden kann.

Eine besonders einfache und wirkungsvolle Vorrichtung zur Vorklimatisierung ist als Gebläse ausgebildet, dessen Luftstrom auf die Puffer-Objektlagervorrichtung gerichtet ist.

Beim Ein- und Ausschleusen ist es ratsam, dass die Vorrichtung zur Vorklimatisierung in Abhängigkeit von einer Betätigung der Bedienöffnung angesteuert ist. Damit kann gezielt die Temperatur im Gehäuse nachgeführt und möglichst konstant gehalten werden.

Wenn die Puffer-Objektlagervorrichtung mit der äußeren Transportvorrichtung und dem Gehäuse insgesamt als separate Einheit ausgebildet sind, die über eine Koppelvorrichtung mit dem Klimaschrank lösbar verbindbar ist, werden die Einsatzmöglichkeiten besonders groß.

Nachfolgend wird die Erfindung anhand von drei in der Zeichnung dargestellten Ausführungsbeispielen weiter beschreiben. Es zeigen schematisch:
- Fig. 1: eine perspektivische Ansicht eines ersten Klimaschranks;
- Fig. 2: einen Teilquerschnitt des ersten Klimaschranks gemäß Figur 1 entlang einer Schnittlinie II-II;
- Fig. 3: einen Teilquerschnitt durch einen zweiten Klimaschrank; und
- Fig. 4: einen Teilquerschnitt durch einen dritten Klimaschrank,

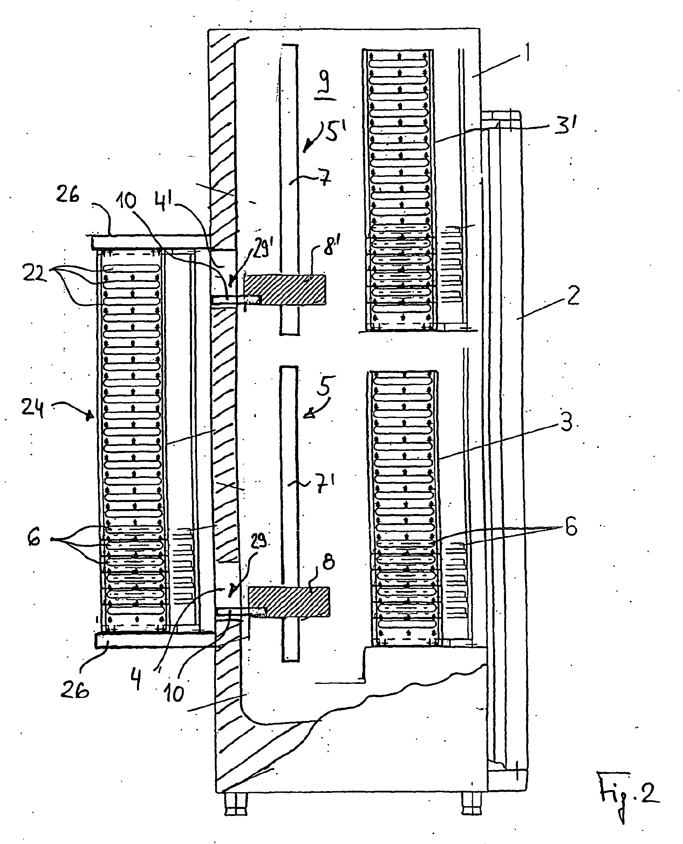

Ein in Figur 1 und Figur 2 veranschaulichter erster Klimaschrank 1 weist eine großflächige Tür 2 zu einem Nutzraum 9 auf, durch welche in dem dargestellten Beispiel zwei übereinander positionierte Objektlagerstationen 3, 3' montiert und entnommen werden können und durch welche Wartungsarbeiten u.ä. möglich sind. In Figur 1 ist die Tür 2 aus Gründen der Anschaulichkeit geöffnet wiedergegeben, während Figur 2 den geschlossenen Zustand wiedergibt. In der gegenüberliegenden Wand des Klimaschranks 1 sind übereinander und beabstandet zwei Transferöffnungen 4, 4' vorhanden, durch die mittels zweier innerer Transportsysteme 5, 5' Objektträger 6 in den Klimaschrank 1 und in die Objektlagerstationen 3, 3' eingebracht und aus ihnen entnommen werden können. Die Transferöffnungen 4, 4' sind durch Türen 11, 11' verschließbar. Die obere Tür 11' ist geschlossen, die untere Tür 11 geöffnet.

An der Außenseite des Klimaschranks ist eine Puffer-Objektlagervorrichtung 20 angebracht, die mit einer ebenfalls an der Außenseite angebrachten äußeren Transportvorrichtung 21 in der Weise zusammenwirkt, dass eine Transportverbindung zwischen den einzelnen Lagerplätzen 22 der Puffer-Objektlagervorrichtung 20 und den Transferöffnungen 4, 4' hergestellt ist.

Die äußere Transportvorrichtung 21 übergibt einen Objektträger an eine der inneren Transportvorrichtungen 5, 5' an einem von zwei Übergebeplätzen 23, 23' oder übernimmt dort einen Objektträger. Die Übergabeplätze 23, 23' liegen jeweils in einem dem Nutzraum 9 zugewandenden Bereich der Transferöffnungen 4, 4' hinter den Türen der Transferöffnungen 4, 4'.

Die Puffer-Objektlagervorrichtung 20 ist in der Art einer Objektträgerkassette 24 ausgebildet. Derartige Objektträgerkassetten 20 werden auch als Stacker bezeichnet. In der Puffer-Objektlagervorrichtung 20 kann eine Vielzahl von Objektträgern übereinander abgelegt werden. Eine Objektträgerkassette 24 besteht im wesentlichen aus einem turmförmigen Aufbau mit zwei Seitenwänden 25, zwischen welchen regalartig übereinander Lagerstellen 22 für die Objektträger 6 angeordnet sind. Typischerweise sind etwa 20 Lagerstellen innerhalb einer Objektträgerkassette 24 übereinander angeordnet. Objektträger werden über eine offene Seite der Objektträgerkassette 24 mittels der äußeren Transportvorrichtung 21 herausgezogen oder eingeschoben.

Die Objektträgerkassette 24 kann fest mit der Wand des Klimaschranks 1 verbunden oder - wie im Ausführungsbeispiel - als separate Einheit lösbar in einer Halterung 26 an der Wand des Klimaschranks 1 gehalten sein. In diesem Fall kann es sich um eine handelsübliche Objektträgerkassette 24 handeln.

Die Puffer-Objektlagervorrichtung 20 wird von einer Bedienperson per Hand befüllt oder entleert, was vor Ort erfolgen kann, oder im Fall einer als eigenständige Einheit ausgebildeten Objektträgerkassette 24 auch an einem anderen Ort, um dann befüllt oder entleert in die Halterung 26 eingesetzt zu werden.

Die äußere Transportvorrichtung 21 umfasst einen Lift 27 und eine daran angeordnete Horizontal-Verschiebeeinheit 28 mit einem Greifer oder ähnlichem zum vertikalen und horizontalen Transport eines Objektträgers zwischen den Lagerstellen 26 und den Transferöffnungen 4, 4'. Entsprechend ist die Höhenverschiebbarkeit des Lifts 27, und die Reichweite der Horizontal-Verschiebeeinheit 28 so gewählt, das beide Transferöffnungen 4, 4' erreicht werden.

Grundsätzlich in der gleichen Art ist jede der inneren Transportvorrichtungen 5, 5' mit jeweils einem weiteren Lift 7, 7' und horizontal bewegbaren Verschiebevorrichtungen 8, 8' ausgebildet. An jeder Horizontalverschiebevorrichtung 8, 8' ist eine Schaufel 10, 10' vorhanden, welche beim Transport den Objektträger aufnimmt.

Die Objektlagervorrichtungen 3, 3' können mehrere Objektträgerkassetten 24' umfassen, beispielsweise in der Anordnung als Karussell oder in Reihenanordnung. Um die Figur übersichtlich zu halten, ist jeweils nur eine Objektträgerkassette 24' dargestellt.

Eine typischer Betrieb verläuft folgendermaßen. Eine bestimmte Zahl der Lagerplätze der Objektlagervorrichtungen 3, 3' ist mit Objektträgern 6 belegt und der Nutzraum 9 ist mit einer Temperatur von ca. -20°C beaufschlagt. In der Puffer-Objektlagervorrichtung 20 befinden sich weitere Objektträger 6 bei Raumtemperatur. Ein zum Auslagern vorgesehener Objektträger wird unter Steuerung einer automatischen Steuereinheit ( nicht dargestellt) mit der Schaufel 10 aus seiner Objektträgerkassette 24' entnommen und über den Lift 7 und die Horizontalverschiebeeinheit 8 zum Übergabeplatz 23 gebracht. Von außen fährt die äußere Transportvorrichtung 21 automatisch gesteuert vor die Tür der betreffenden Transferöffnung 4, die kurz geöffnet wird, um den Objektträger von der Schaufel 10 übernehmen zu können. Nach dem Ausfahren der äußeren Transportvorrichtung 21 aus der Transferöffnung 4 wird die Tür wieder verschlossen, so dass die Schaufel nur kurz der Außentemperatur ausgesetzt war. Die äußere Transportvorrichtung 21 legt den Objektträger mittels Lift 27 und Horizontal-Verschiebevorrichtung 28 in einem Lagerplatz der Objektträgerkassette 24 ab, wo er von einer Bedienperson entnommen wird. Eine Befüllung des Klimaschranks verläuft in der umgekehrten Reihenfolge.

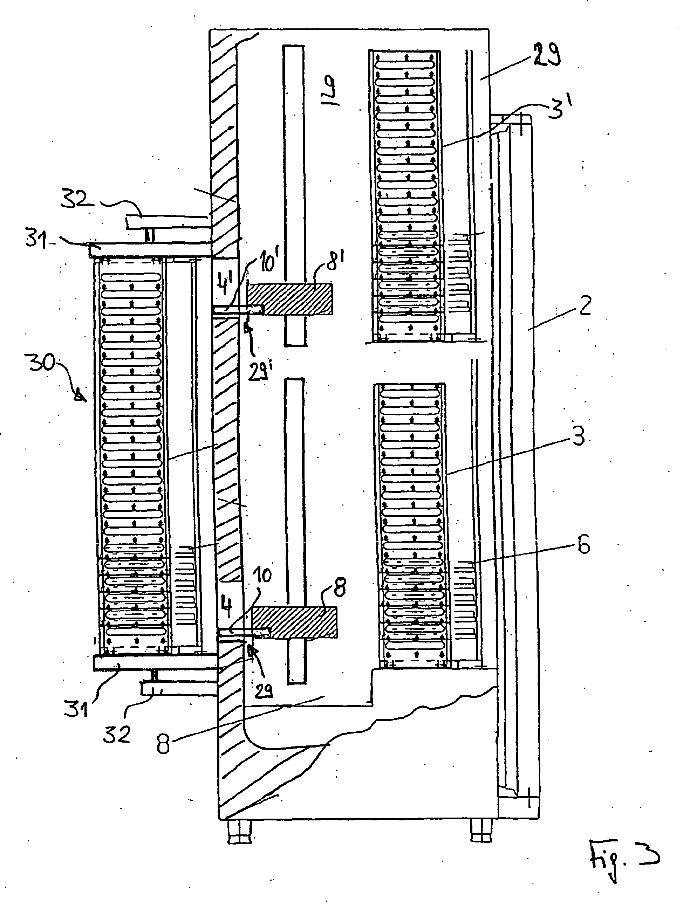

Das Ausführungsbeispiel eines zweiten Klimaschranks 29 gemäß Figur 3 unterscheidet sich vom ersten Klimaschrank 1 dadurch, das die Puffer-Objektlagervorrichtung 30 anstelle einer einzigen Objektträgerkassette 24 eine Vielzahl von Objektträgerkassetten 24 aufweist, die in der Art eines Karussells auf einer als Kassettenträger dienenden Drehscheibe 31 sternförmig in der Weise angeordnet, dass ihre offenen Seiten zum Bestücken und zur Entnahme von Objektträgern 24 nach außen weisen. Durch Rotation der Drehscheibe 31 wird die jeweils gewünschte Objektträgerkassette 24 zur äußeren Transportvorrichtung verfahren und ausgerichtet, die über ihren höhenverstellbaren Greifer gezielt auf eine Lagerstelle zugreifen kann. Die Drehscheibe 31 wiederum ist über eine Drehscheibenlagerung 32 an der Wand des zweiten Klimaschranks 29 gehalten. Die Objektträgerkassetten 24 sind lösbar auf der Drehscheibe 31 gehalten.

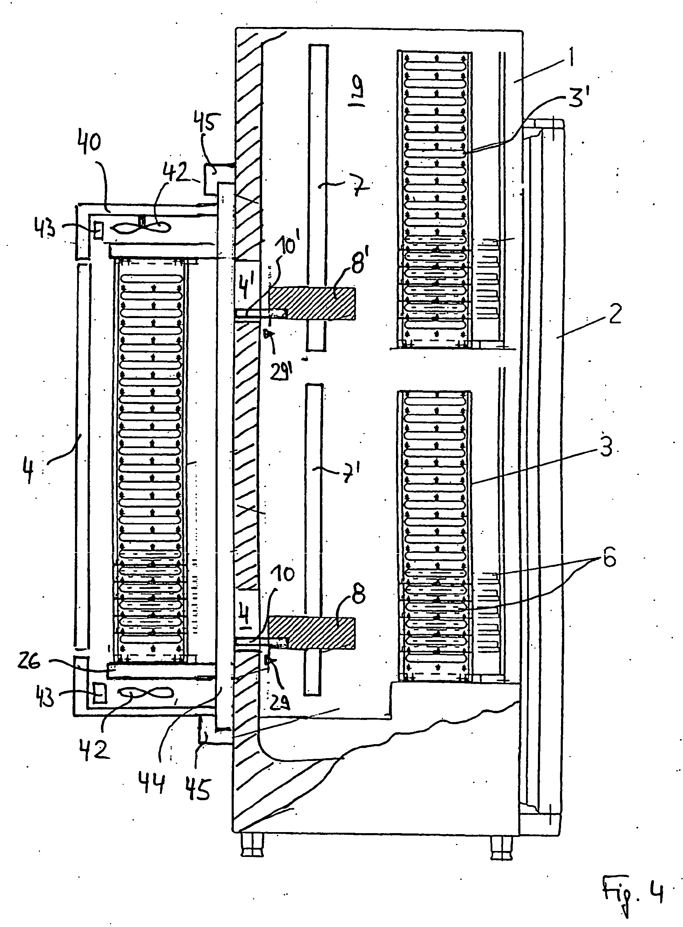

Gemäß Figur 4 ist ein Gehäuse 40 um die Puffer-Objektlagervorrichtung 20 und die äußere Transportvorrichtung 21 angebracht. Es weist eine Bedienertür 41 zum Befüllen und Entleeren der Puffer-Objektlagervorrichtung 20 durch eine Bedienperson auf. Mittels eines Gebläses 42 kann Kühlluft oder Luft, die über eine Heizvorrichtung 43 erwärmt wurde, auf die Puffer-Objektlagervorrichtung 20 gerichtet werden, um darin abgelegte Objektträger 6 vorzukühlen oder aufzutauen.

Gebläse 42 und Heizvorrichtung 43 können zwar von Hand ein- und ausgeschaltete werden, bevorzugt werden sie aber thermostatgesteuert oder automatisch in Abhängigkeit davon ein- und ausgeschaltet, ob die Bedienertür 41 geöffnet oder geschlossen wurde.

Figur 4 veranschaulicht ferner, dass das Gehäuse 40, die Puffer-Objektlagervorrichtung 20 und die äußeren Transportvorrichtung 21 an einer gemeinsamen Basis 44 angeordnet sind, die mittels einer Kopplungsvorrichtung 45 lösbar an der Wand des dritten Klimaschranks 50 befestigt sind.

Im Übrigen sind gleiche Teile wie in Figur 1 mit gleichen Bezugszeichen versehen.

## Patentansprüche

1. Klimaschrank (1) mit einer Tür (2), einem Nutzraum (9), mindestens einer Objektlagervorrichtung (3), mindestens einer inneren Transportvorrichtung (5) und mindestens Transferöffnung (4),
**dadurch gekennzeichnet,**
**dass** außenseitig vor der Transferöffnung (4) eine Puffer-Objektlagervorrichtung (20) sowie eine äußere Transportvorrichtung (21) angeordnet sind, und dass die äußere Transportvorrichtung (21) eine Transportverbindung zwischen der Puffer-Objektlagervorrichtung (20) und der Transferöffnung (4) herstellt, über welche ein Objekt zwischen der Puffer-Objektlagervorrichtung (20) und der inneren Transportvorrichtung (5) verbracht werden kann.

2. Klimaschrank (1) nach Anspruch 1,
**dadurch gekennzeichnet,**
**dass** die Puffer-Objektlagervorrichtung (20) eine Vielzahl von Objektlagerplätzen (22) aufweist.

3. Puffer-Objektlagervorrichtung (20) zur Verwendung mit einem Klimaschrank (1) nach Anspruch 1,
**dadurch gekennzeichnet,**
**dass** sie als separate Einheit ausgebildet ist, die über eine Koppelvorrichtung (45) mit dem Klimaschrank lösbar verbindbar ist.

4. Klimaschrank (1) nach Anspruch 2,
**dadurch gekennzeichnet,**
**dass** die Puffer-Objektlagervorrichtung (20) mindestens eine Objektträgerkassette (24) aufweist.

5. Klimaschrank (1) nach Anspruch 4,
**dadurch gekennzeichnet,**
**dass** die Puffer-Objektlagervorrichtung (20) mehrere Objektlagerkassetten (24) in einer Karussellanordnung (31) aufweist.

6. Klimaschrank (1) nach einem der vorhergehenden Ansprüche,
**dadurch gekennzeichnet,**
**dass** die äußere Transportvorrichtung (21) einen vertikal verfahrbaren Lift (7) und eine horizontal verfahrbare Verschiebeeinheit (8) aufweist.

7. Klimaschrank (1) nach einem der vorhergehenden Ansprüche,
**dadurch gekennzeichnet,**
**dass** ein Übergabeplatz (23) für ein Objekt zwischen der äußeren und der inneren Transportvorrichtung (21; 5, 5') in einem Nutzraum (9) zugewandten Bereich der Transferöffnung (4, 4') hinter der Tür der Transferöffnungen (4, 4') liegt.

8. Klimaschrank (1) nach einem der vorhergehenden Ansprüche mit mehreren Transferöffnungen (4, 4'), über welche entsprechend viele Objektlagervorrichtungen (3) mittels mehreren inneren Transportvorrichtungen (5, 5') beaufschlagt werden,
**dadurch gekennzeichnet,**
**dass** die äußere Transportvorrichtung (21) mit allen Transferöffnungen (4, 4') in Wirkverbindung steht.

9. Klimaschrank (1) nach einem der vorhergehenden Ansprüche,
**dadurch gekennzeichnet,**
**dass** die Puffer-Objektlagervorrichtung (20) und die äußere Transportvorrichtung (21) in einem Gehäuse (40) mit einer Bedienöffnung (41) angeordnet sind.

10. Puffer-Objektlagervorrichtung (20) mit äußerer Transportvorrichtung (21) und Gehäuse (40) zur Verwendung mit einem Klimaschrank (1) nach Anspruch 9,
**dadurch gekennzeichnet,**
**dass** sie insgesamt als separate Einheit ausgebildet sind, die über eine Koppelvorrichtung (45) mit dem Klimaschrank (1) lösbar verbindbar ist.

11. Gegenstand nach einem der vorhergehenden Ansprüche,
**dadurch gekennzeichnet,**
**dass** eine Vorrichtung zur Vorklimatisierung (42, 43) der Puffer-Objektlagervorrichtung (20) und/oder der äußeren Transportvorrichtung (21) vorhanden ist.

12. Gegenstand nach Anspruch 11,
**dadurch gekennzeichnet,**
**dass** die Vorrichtung zur Vorklimatisierung als Gebläse (42) ausgebildet ist.

13. Gegenstand nach einem der Ansprüche 11 oder 12,
**dadurch gekennzeichnet,**
**dass** die Vorrichtung zur Vorklimatisierung in Abhängigkeit von einer Betätigung der Bedienöffnung (41) angesteuert ist.

## Claims

1. A climatic cabinet (1), comprising a door (1), a working space (9), at least one specimen storage apparatus (3), at least one inner transport apparatus (5), and at least one transfer opening (4),
**characterized in that**
a buffer specimen storage apparatus (20) and an outer transport apparatus (21) are arranged on the outside in front of the transfer opening (4), and that the outer transport apparatus (21) produces a transport connection between the buffer specimen storage apparatus (20) and the transfer opening (4), via which a specimen can be moved between the buffer specimen storage apparatus (20) and the inner transport apparatus (5).

2. A climatic cabinet (1) according to claim 1,
**characterized in that**
the buffer specimen storage apparatus (20) comprises a plurality of specimen storage places (22).

3. A buffer specimen storage apparatus (20) for use with a climatic cabinet (1) according to claim 1,
**characterized in that**
it is arranged as a separate unit which can detachably be connected via a coupling apparatus (45) with the climatic cabinet.

4. A climatic cabinet (1) according to claim 2,
**characterized in that**
the buffer specimen storage apparatus (20) comprises at least one specimen slide cassette (24).

5. A climatic cabinet (1) according to claim 4,
**characterized in that**
the buffer specimen storage apparatus (20) comprises several specimen slide cassettes (24) in a carousel arrangement (31).

6. A climatic cabinet (1) according to one of the preceding claims,
**characterized in that**
the outer transport apparatus (21) comprises a vertically displaceable lift (7) and a horizontally displaceable displacement unit (8).

7. A climatic cabinet (1) according to one of the preceding claims,
**characterized in that**
a transfer place (23) for a specimen is disposed between the outer and the inner transport apparatus (21; 5, 5') in a region of the transfer opening (4, 4') facing a working space (9) behind the door of the transfer openings (4, 4').

8. A climatic cabinet (1) according to one of the preceding claims with several transfer openings (4, 4'), via which a respective number of specimen storage apparatuses (3) are conveyed by means of several inner transport apparatuses (5, 5'),
**characterized in that**
the outer transport apparatus (21) is in operative connection with all transfer openings (4, 4').

9. A climatic cabinet (1) according to one of the preceding claims,
**characterized in that**
the buffer specimen storage apparatus (20) and the outer transport apparatus (21) are arranged in a housing (40) with an operating opening (41).

10. A buffer specimen storage apparatus (20) with an outer transport apparatus (21) and a housing (40) for use in a climatic cabinet (1) according to claim 9,
**characterized in that**
it is arranged in its entirety as a separate unit which can detachably be connected with the climatic cabinet (1) via a coupling apparatus (45).

11. An item according to one of the preceding claims, **characterized in that** an apparatus is provided for pre-air-conditioning (42, 43) of the buffer specimen storage apparatus (20) and/or the outer transport apparatus (21).

12. An item according to claim 11,
**characterized in that**
the apparatus for pre-air-conditioning is arranged as a fan (42).

13. An item according to one of the claims 11 or 12,
**characterized in that**
the apparatus for pre-air-conditioning is triggered depending on an actuation of the operating opening (41).

## Revendications

1. Armoire climatique (1) avec une porte (2), un espace utile (9), au moins un dispositif porte-objet (3), au moins un dispositif de transport interne (5) et au moins une ouverture de transfert (4),
**caractérisée en ce**
**qu'**un dispositif porte-objet formant tampon (20) et un dispositif de transport extérieur (21) sont disposés devant l'ouverture de transfert (4), et en ce que le dispositif de transport extérieur (21) crée une liaison de transport entre le dispositif porte-objet formant tampon (20) et l'ouverture de transfert (4), par laquelle un objet peut être transporté entre le dispositif porte-objet formant tampon (20) et le dispositif de transport intérieur (5).

2. Armoire climatique (1) selon la revendication 1,
**caractérisée en ce**
**que** le dispositif porte-objet formant tampon (20) présente une pluralité d'emplacements porte-objet (22).

3. Dispositif porte-objet formant tampon (20) destiné à être utilisé dans une armoire climatique (1) selon la revendication 1,
**caractérisé en ce**
**qu'**il est conçu comme une unité séparée qui peut être reliée de façon amovible à l'armoire climatique par un dispositif de couplage (45).

4. Armoire climatique (1) selon la revendication 2,
**caractérisée en ce**
**que** le dispositif porte-objet formant tampon (20) présente au moins une cassette porte-objet (24).

5. Armoire climatique (1) selon la revendication 4,
**caractérisée en ce**
**que** le dispositif porte-objet formant tampon (20) présente plusieurs cassettes porte-objet (24) dans une disposition en tourniquet (31).

6. Armoire climatique (1) selon l'une des revendications précédentes,
**caractérisée en ce**
**que** le dispositif de transport extérieur (21) présente un élévateur (7) mobile verticalement et une unité de translation (8) mobile horizontalement.

7. Armoire climatique (1) selon l'une des revendications précédentes,
**caractérisée en ce**
**qu'**un emplacement de dépose (23) pour un objet se situe entre les dispositifs de transport extérieur et intérieur (21 ; 5, 5') dans une zone de l'ouverture de transfert (4, 4') orientée vers l'espace utile (9) derrière la porte des ouvertures de transfert (4, 4').

8. Armoire climatique (1) selon l'une des revendications précédentes avec plusieurs ouvertures de transfert (4, 4'), par lesquelles des dispositifs porte-objet (3) en nombre correspondant sont sollicités au moyen de plusieurs dispositifs de transport intérieurs (5, 5'),
**caractérisée en ce**
**que** le dispositif de transport extérieur (21) est en liaison active avec toutes les ouvertures de transfert (4, 4').

9. Armoire climatique (1) selon l'une des revendications précédentes,
**caractérisée en ce**
**que** le dispositif porte-objet formant tampon (20) et le dispositif de transport extérieur (21) sont disposés dans un boîtier (40) avec une ouverture de manipulation (41).

10. Dispositif porte-objet formant tampon (20) avec un dispositif de transport extérieur (21) et un boîtier (40) destiné à être utilisé avec une armoire climatique (1) selon la revendication 9,
**caractérisé en ce**
**qu'**il est conçu comme une unité séparée qui peut être reliée de façon amovible à l'armoire climatique (1) par un dispositif de couplage (45).

11. Objet selon l'une des revendications précédentes,
**caractérisé en ce**
**qu'**il est prévu un dispositif pour la climatisation préalable (42, 43) du dispositif porte-objet formant tampon (20) et/ou du dispositif de transport extérieur (21).

12. Objet selon la revendication 11,
**caractérisé en ce**
**que** le dispositif de climatisation préalable est conçu comme une soufflerie (42).

13. Objet selon l'une des revendications 11 ou 12,
**caractérisé en ce**
**que** le dispositif de climatisation préalable est activé en fonction d'un actionnement de l'ouverture de manipulation (41).
